# EUROPEAN PATENT SPECIFICATION

(11) **EP 0 713 137 B1**
(45) Date of publication and mention of the grant of the patent: **22.09.1999**
(21) Application number: 95117716.1
(22) Date of filing: 09.11.1995
(51) Int. Cl.: G03C 7/12, G03C 7/30, G02F 1/1335, G02B 5/22

(54) **Silver halide photosensitive material for color filter and method for producing color filter using the same**
Lichtempfindliches Silberhalogenidmaterial für Farbfilter und Methode zur Herstellung von Farbfiltern unter Verwendung derselben
Matériau à l'halogénure d'argent sensible à la lumière pour filtre coloré et méthode de préparation d'un filtre coloré en utilisant le même

(30) Priority: 09.11.1994 JP 27464994
(43) Date of publication of application: 22.05.1996
(73) Proprietor: FUJI PHOTO FILM CO., LTD., Kanagawa-ken (JP)
(72) Inventor: Hirai, Hiroyuki, Minami Ashigara-shi, Kanagawa (JP); Sato, Kozo, Minami Ashigara-shi, Kanagawa (JP)
(74) Representative: Grünecker, Kinkeldey, Stockmair & Schwanhäusser Anwaltssozietät

(56) References cited:
- EP-A- 0 320 778
- EP-A- 0 396 824
- EP-A- 0 491 197
- US-A- 4 814 827
- US-A- 5 571 663
- PATENT ABSTRACTS OF JAPAN vol. 011, no. 270 (P-611), 3 September 1987 & JP-A-62 071950 (KONISHIROKU PHOTO IND CO LTD), 2 April 1987,
- DATABASE WPI Section Ch, Week 9030 Derwent Publications Ltd., London, GB; Class E24, AN 90-228114 XP002021865 & JP-A-02 156 203 (KONICA CORP) , 15 June 1990

## Description

The present invention relates to a silver halide photosensitive material suitable for producing a color filter which comprises red, green and blue parts excellent in a spectral transmission characteristic and a black part having a spectral absorbing characteristic of high density arrayed in a mosaic or stripe pattern, and a method for producing such a color filter using the same. The present invention relates, in particular, to a silver halide photosensitive material suitable for producing a color filter which is excellent in reproducibility of a green color of high visual density and a spectral transmission characteristic, and a method for producing such a color filter using the same.

A color filter is used for a color face plate for a Braun tube display, a photoelectric transfer element plate for copying, a filter for a single tube type color television camera, a flat panel display using liquid crystal, and an element of a color solid-state image sensor.

A color filter generally used comprises three primary colors of red, green and blue regularly set in array, but some comprise four or more colors according to necessity. For example, a color filter for a camera tube or a color filter for a liquid crystal display device requires a black pattern (a black matrix) for various purposes.

Examples of arrangements of red, green and blue include mosaic, stripe, delta arrays or the like which can be selected according to necessity.

Conventionally known methods of manufacturing a color filter include an evaporation method, a dyeing method, a printing method, a pigment dispersing method, an electrodeposition method, and a resist electrodeposition transfer method. However, these methods have drawbacks such that manufacturing processes are complicated, color filters obtained by these methods are liable to generate pinholes and scratches, yields are bad, accuracy is lacked or the like.

As a means to solve these drawbacks, methods of manufacturing a color filter using a silver halide photosensitive material have been discussed such as a coupler-in-developing solution type developing method (disclosed in, e.g., JP-A-55-6342) (the term "JP-A" as used herein refers to a "published unexamined Japanese patent application") and a coupler-in-emulsion type developing method (disclosed in, e.g., JP-A-62-148952 and JP-A-62-71950). However, both of these methods fundamentally comprise forming red, green and blue colors in combination of three couplers of yellow, magenta and cyan, therefore, for example, a cyan coupler used for obtaining a desired blue color does not necessarily form a desired green color. Further, the former method requires at least three times of color development, accordingly, the processing step is not said to be simple.

Accordingly, it is the object of the present invention to provide a color filter comprising red, green and blue parts excellent in a spectral transmission characteristic, in particular, excellent in spectral transmission characteristic of a green color having high visual density, and to provide a color filter requiring no complicated processing step, having an aptitude for mass production, and having a black part of high optical density.
(I) The above object of the present invention has been attained by a silver halide photosensitive material for a color filter which comprises
   - three silver halide emulsion layers having different color sensitivities on a support containing couplers in combination such that the silver halide emulsion layers form blue, green, and red colors, respectively, by a coupling reaction with the oxidation product of a developing agent, wherein the green-coloring silver halide emulsion layer contains a yellow coupler and a cyan coupler, and the yellow component in colored green has an absorption peak wavelength between 400 nm and 450 nm and when the absorbance at the peak wavelength is taken as 1, the absorbance at 500 nm is 0.35 or less, and the cyan component in colored green has an absorption peak wavelength between 630 nm and 700 nm and when the absorbance at the peak wavelength is taken as 1, the absorbance at 570 nm is 0.35 or less: and
   - at least one silver halide emulsion layer having a color sensitivity different from those of said three silver halide emulsion layers on the support, wherein said at least one silver halide emulsion layer is a layer containing a coupler for color correction so as to become substantially black with a transmission density of 2.5 or more when all the couplers on the support are reacted.
(II) the object of the present invention is further attained by a silver halide photosensitive material for a color filter which comprises
   - three silver halide emulsion layers having different color sensitivities on a support containing couplers in combination such that the silver halide emulsion layers form blue, green, and red colors, respectively, by a coupling reaction with the oxidation product of a developing agent, wherein at least a green-coloring silver halide emulsion layer of the silver halide emulsion layers comprises two unit layers in which one unit layer contains a yellow coupler and the other unit layer contains a cyan coupler, the yellow component in colored green has an absorption peak wavelength between 400 nm and 450 nm and when the absorbance at the peak wavelength is taken as 1, the absorbance at 500 nm is 0.35 or less, and the cyan component in colored green has an absorption peak wavelength between 630 nm and 700 nm and when the absorbance as the peak wavelength is taken as 1, the absorbance at 570 nm is 0.35 or less; and
   - at least one silver halide emulsion layer having a color sensitivity different from those of said three silver halide emulsion layers on the support, wherein said at least one silver halide emulsion layer is a layer containing a coupler for color correction so as to become substantially black with a transmission density of 2.5 or more when all the couplers on the support are reacted.

A color filter having blue, green and red pixel pattems can be obtained by pattern exposing the silver halide photosensitive material containing photosensitive silver halide on a support according to the present invention, color developing the material in the presence of a developing agent, followed by desilvering.

In the following, the drawings are briefly described.

Fig. 1 is a characteristic curve of the silver halide photosensitive material of the present invention.

Fig. 2 is an explanatory drawing of a mask filter for use in exposing a photosensitive material.

Fig. 3 is an explanatory drawing of the coloring condition of the color filter of the present invention.

Fig. 4 is a schematic drawing of the layer constitution of the silver halide photosensitive material of the present invention.

Fig. 5 is an explanatory drawing of one example of a color liquid crystal display device which uses the color filter of the present invention.

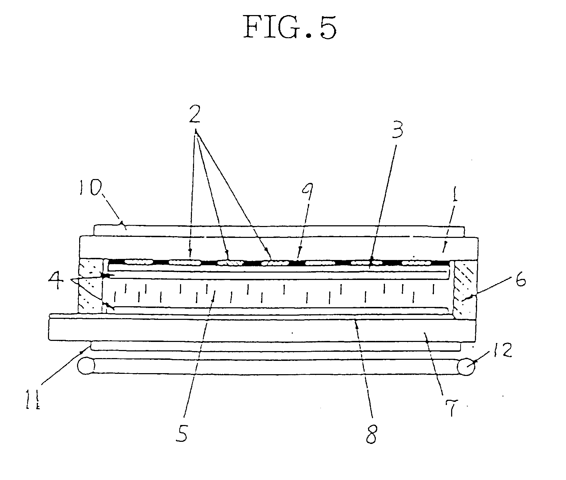

Symbols in Fig. 5 are explained below.
- 1, 7:: Glass substrate
- 2:: RGB color filter
- 3, 8:: Transparent electrode
- 4:: Orientation layer
- 5:: Liquid crystal
- 6:: Sealant
- 9:: Black matrix
- 10, 11:: Polarizing plate
- 12:: Back light

The present invention is described in detail below.

The yellow component and cyan component described above correspond to, for example, components obtained by measuring the green pixel pattern with blue light and red light, respectively, under the Status A condition by means of a X-Rite 310TR densitometer.

The developing agents for use in the present invention are not particularly limited so long as the oxidants thereof formed by the oxidation reduction reaction with the silver halide form a dye such as cyan, magenta, yellow, red, or blue by coupling reaction with couplers, but an aromatic primary amine color developing agent is preferably used. These developing agents are described, for example, in T.H. James, The Theory of the Photographic Process, Fourth Ed., pages 291 to 372, Macmillan Publishing Co. (1977), Research Disclosure (RD), Vol. 176, No. 17643 (December, 1978), pages 28 and 29, and ibid., No. 18716 (November, 1979), page 651, etc.

The couplers for use in the present invention are a coupler-in-emulsion type coupler (internal coupler) which has a non-diffusive group and are used by being incorporated in a photosensitive layer. Examples of the internal type coupler include those disclosed in the above JP-A-62-148952, JP-A-63-261361 and Japanese Patent Application No. 6-84315.

The couplers used in the present invention for forming the green color of a color filter are couplers comprising a combination of a yellow coupler whose yellow dye formed by a coupling reaction with the oxidant of a developing agent has an absorption peak wavelength between 400 nm and 450 nm and satisfies the condition that when the absorbance at the peak wavelength is taken as 1, the absorbance at 500 nm is 0.35 or less, and a cyan coupler whose cyan dye formed by a coupling reaction with the oxidant of a developing agent has an absorption peak wavelength between 630 nm and 700 nm and satisfies the condition that when the absorbance at the peak wavelength is taken as I, the absorbance at 570 nm is 0.35 or less. However, even if the same couplers are used, the light absorbing characteristics (hues) of the dyes formed by a coupling reaction are variable according to the kinds of developing agents used and high boiling point organic solvents and additives used on emulsifying and dispersing the coupler. Accordingly, any combination may be used in the present invention so long as the light absorbing characteristics of the yellow and cyan dyes formed satisfy the above conditions.

Spectral transmittance between 520 nm and 560 nm of the green color of a color filter is generally at least 50% or more, preferably 60% or more.

Yellow and cyan couplers for forming red and blue colors of the color filter in the present invention may be the same couplers as the couplers which are used for forming the above described green color, but it is preferred to use other couplers having different light absorbing characteristics. For example, it is preferred that the peak wavelength of the dye formed by the yellow coupler which is used for forming red color is longer than that of the dye formed by the yellow coupler used for forming green color by 5 to 50 nm and the peak wavelength of the dye formed by the cyan coupler which is used for forming blue color is shorter than that of the dye formed by the cyan coupler used for forming green color by 5 to 80 nm. Further, when the same yellow and cyan couplers as used for forming green color are used for forming red and blue colors, high boiling point organic solvents and additives used in combination in emulsifying and dispersing the couplers are preferably selected such that the light absorbing characteristics of the yellow and cyan dyes formed can satisfy the above conditions.

Moreover, the couplers used for forming red or blue color are not necessarily used in combination such as yellow and magenta couplers, or cyan and magenta couplers as usual. Couplers capable of forming red or blue color by coupling with the oxidant of a developing agent may be used alone or in combination of two or more thereof.

Spectral transmittance between 620 nm and 700 nm of the red color of a color filter is generally at least 60% or more, preferably 80% or more, and spectral transmittance between 430 nm and 480 nm of the blue color of a color filter is generally at least 50% or more, preferably 60% or more.

The difference in the light absorbing characteristics required of the dyes formed between the silver halide color photosensitive material for the color filter according to the present invention and a silver halide color photosensitive material for general color photography is due to the fact that the former is sufficient to reproduce only red (R), green (G) and blue (B), whereas the latter must widely reproduce not only every chromatic color but also achromatic color using three primary colors of cyan, magenta and yellow. That is, it has been found that the spectral transmission characteristics of R, G and B required of the color filter are difficult to be obtained by the combination of fundamentally three kinds of cyan, magenta and yellow couplers and one kind of a color developing agent as the silver halide color photosensitive material for color photography.

The constitution of the silver halide photosensitive material for the color filter of the present invention is described below.

Photosensitive materials incorporating couplers therein according to the present invention are used for producing color filters by a coupler-in-emulsion type developing method for the simplicity of processing step. The photosensitive materials have the following constitution (I) or (II).
(I) A photosensitive material which comprises three silver halide emulsion layers having different color sensitivities on a support and contains couplers in combination such that the silver halide emulsion layers form blue, green, and red colors, respectively, by a coupling reaction with the oxidant of a developing agent, wherein the green-coloring silver halide emulsion layer contains a yellow coupler and a cyan coupler, the yellow component in colored green has an absorption peak wavelength between 400 nm and 450 nm and when the absorbance at the peak wavelength is taken as 1, the absorbance at 500 nm is 0.35 or less, and the cyan component in colored green has an absorption peak wavelength between 630 nm and 700 nm and when the absorbance at the peak wavelength is taken as 1, the absorbance at 570 nm is 0.35 or less;
(II) a photosensitive material which comprises three silver halide emulsion layers having different color sensitivities on a support and contains couplers in combination such that the silver halide emulsion layers form blue, green, and red colors, respectively, by a coupling reaction with the oxidant of a developing agent, wherein at least a green-coloring silver halide emulsion layer of the silver halide emulsion layers comprises two unit layers in which one unit layer contains a yellow coupler and the other unit layer contains a cyan coupler, the yellow component in colored green has an absorption peak wavelength between 400 nm and 450 nm and when the absorbance at the peak wavelength is taken as 1, the absorbance at 500 nm is 0.35 or less, and the cyan component in colored green has an absorption peak wavelength between 630 nm and 700 nm and when the absorbance at the peak wavelength is taken as 1, the absorbance at 570 nm is 0.35 or less;
the silver halide photosensitive material which comprises three silver halide emulsion layers having different color sensitivities described in (I) or (II) above further comprises at least one other silver halide emulsion layer having different color sensitivity on a support, wherein the at least one other silver halide emulsion layer is a layer containing a coupler for color correction so as to become substantially black of transmission density of 2.5 or more when all the couplers on the support are reacted. This means that when measured with blue, green, and red light, respectively, under the Status A condition by means of a X-Rite 310TR densitometer, the value obtained by each measurement is 2.5 or more.

As specific examples of couplers which can be used for the green part of the color filter of the present invention, specific examples of cyan couplers (C) and yellow couplers (Y) which form preferred colors by a coupling reaction with the oxidant of p-phenylenediamine derivatives, which are aromatic primary amine developing agents, are shown below, however, the present invention should not be construed as being limited to these combinations.

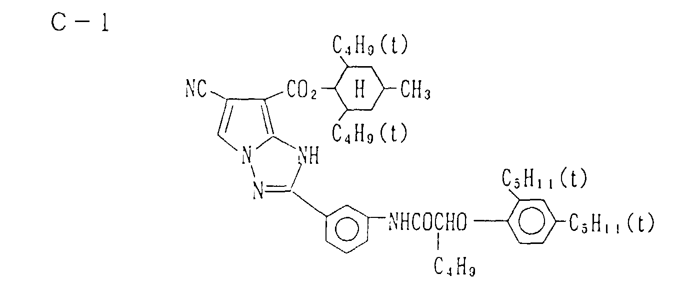

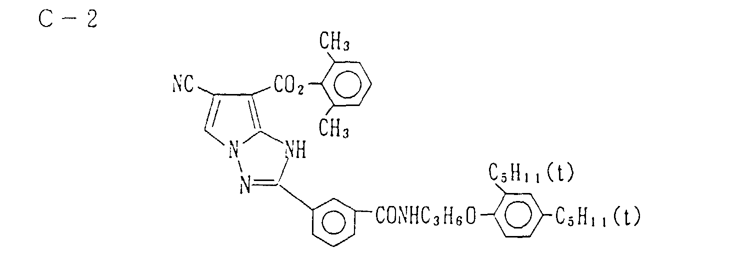

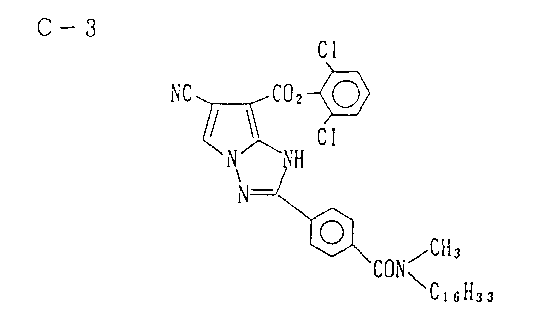

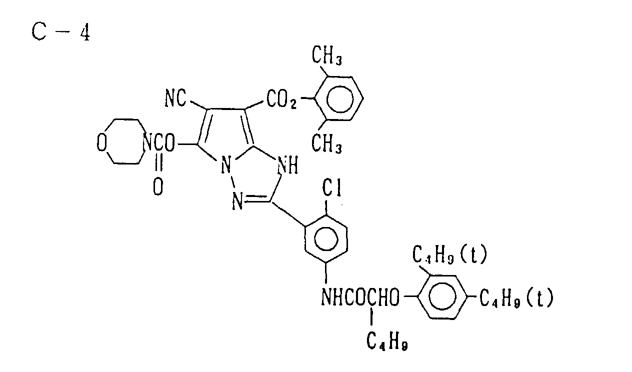

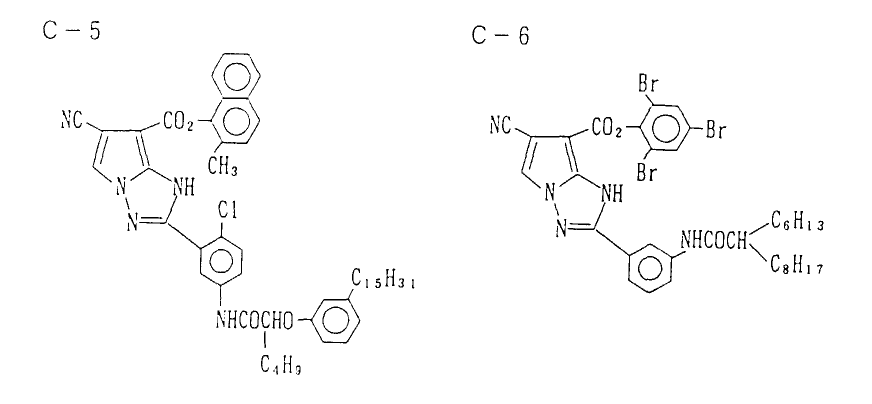

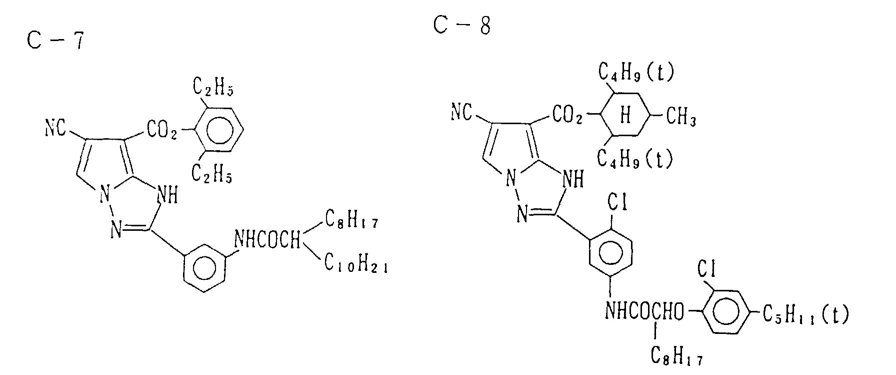

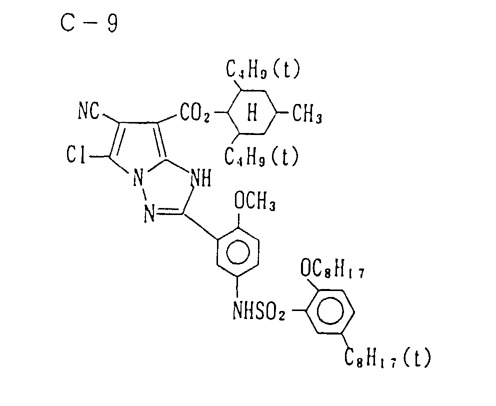

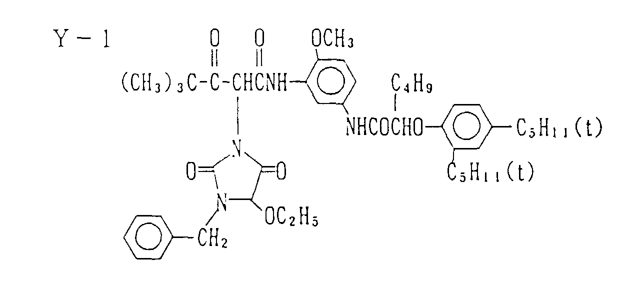

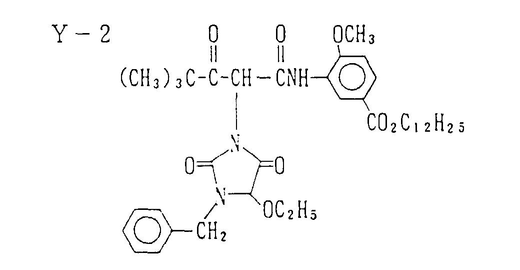

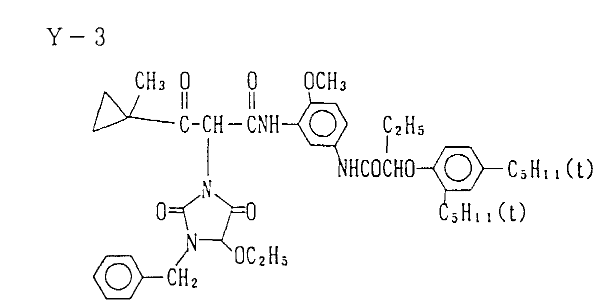

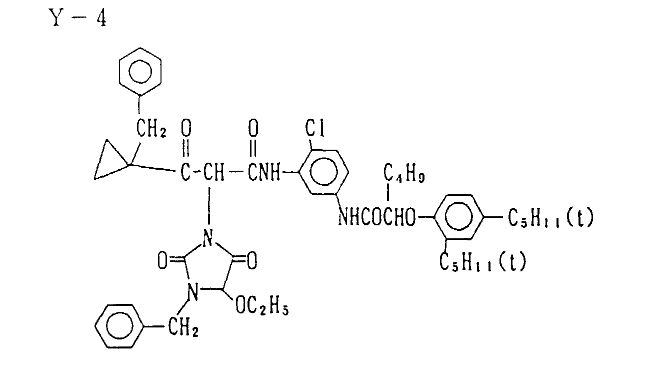

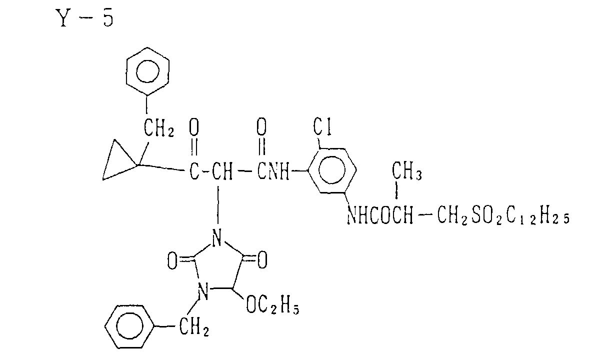

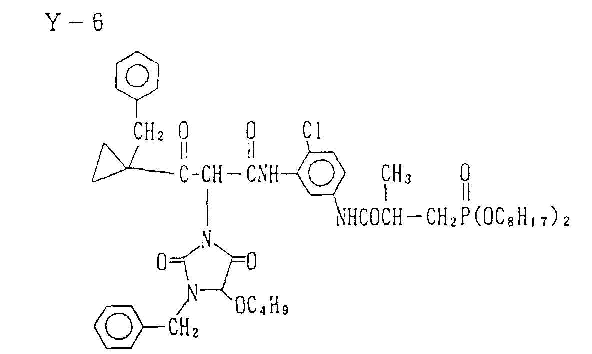

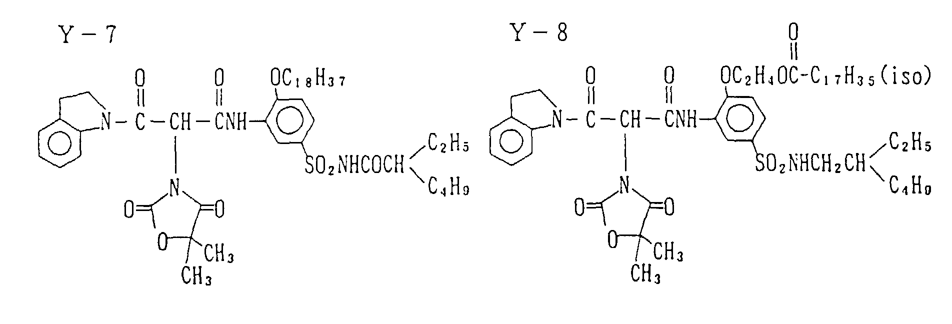

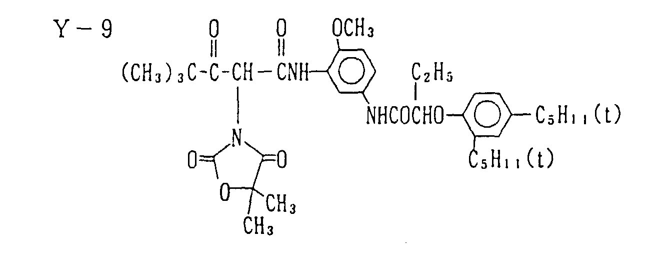

Preferred embodiments of the silver halide photosensitive material for a color filter of the present invention, the above (I) and (II) are described below.

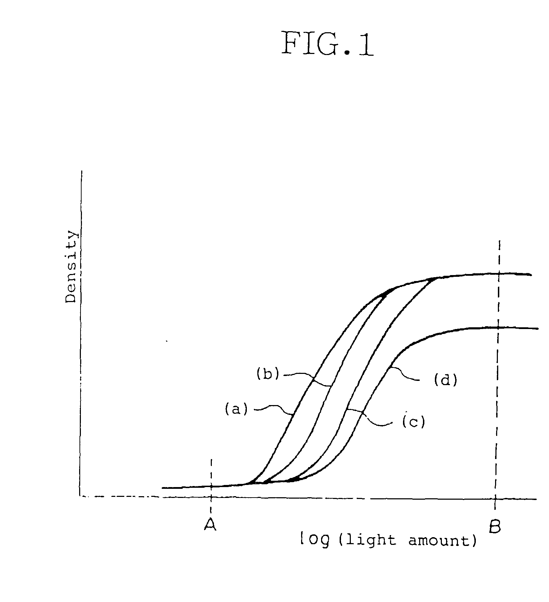

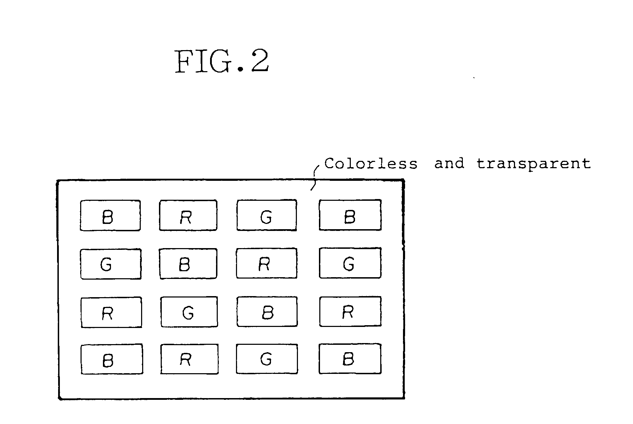

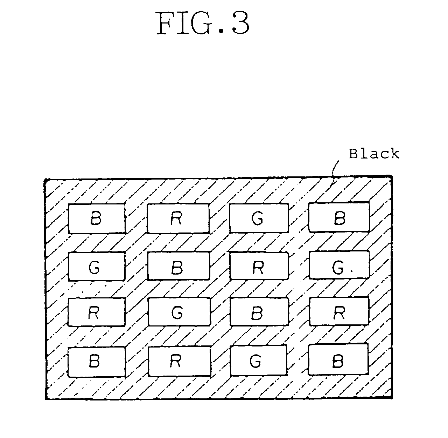

In the silver halide photosensitive material having the characteristic curve as shown in Fig. 1 the blue-sensitive emulsion layer (curve (c) in Fig. 1) contains a cyan coupler and a magenta coupler (or a blue coupler), the green-sensitive emulsion layer (curve (b)) contains the yellow coupler and the cyan coupler which satisfy the above described conditions, the red-sensitive emulsion layer (curve (a)) contains a yellow coupler and a magenta coupler (or a red coupler), and the infrared-sensitive emulsion layer (curve (d)) contains a coupler for color correction so as to become substantially black of transmission density of 2.5 or more (Equivalent Neutral Density (END) ≧ 2.5). The material is exposed to red, green, blue and white lights (including the necessary infrared light) through the mask filter as shown in Fig. 2 having the pattern of the density capable of giving exposure at point A and point B in Fig. 1. Subsequently, the material is subjected to color development, desilvering and washing, and a color filter colored red, green, blue and black as shown in Fig. 3 can be obtained.

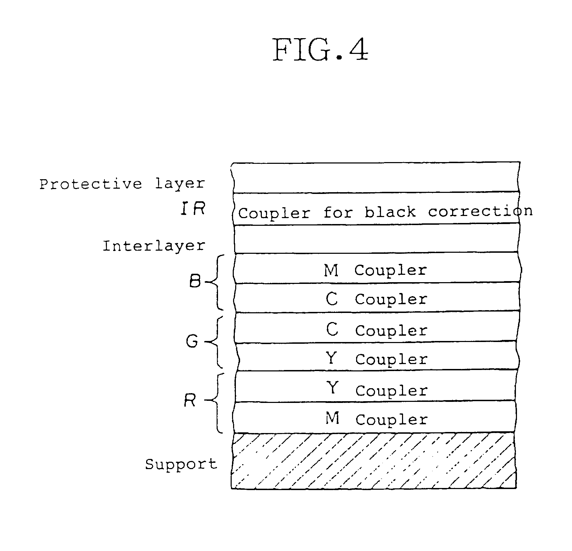

One example of the layer constitution of the silver halide photosensitive material of the present invention is shown in Fig. 4. As shown in Fig. 4, as the layers being adjacent to each other can contain couplers of the similar system, color mixing of dyes between the emulsion layers which form different colors can be decreased without an interlayer, as a result, the film thickness of a color filter can be reduced. A color filter can be obtained using the silver halide photosensitive material of the present invention by exposing the material through the mask filter as shown in Fig. 2, the same as above, then subjecting to color development, desilvering and washing. Of three silver halide emulsion layers having different color sensitivities according to the present invention, at least a green-coloring silver halide emulsion layer comprises two unit layers and the two unit layers having the same color sensitivity may have different photographic speeds or the same photographic speed. One or more kinds of a cyan coupler is incorporated in one unit layer, and one or more kinds of a yellow coupler is incorporated in the other unit layer such that the hue of the color which the coupler contained in one unit layer forms is different from that of the color which the coupler contained in the other unit layer forms. When a red-coloring or blue-coloring silver halide emulsion layer comprises a red coupler alone or a blue coupler alone, these silver halide emulsion layers do not necessarily comprise two unit layers.

According to the present invention, the silver halide photosensitive material preferably further comprises an infrared-sensitive emulsion layer, in addition to the constitution (I) or (II) above, and this emulsion layer contains a coupler for color correction so as to become substantially black of transmission density of 2.5 or more (END ≧ 2.5) when all the couplers on the support are reacted. This infrared-sensitive emulsion layer, the fourth silver halide emulsion layer, may be constituted of two or more unit layers. In such a case, an interlayer between the infrared-sensitive emulsion layer and the adjacent silver halide emulsion layer can be removed by appropriately selecting the layer constitution and couplers to be contained in each unit layer. Further, the couplers for color correction may be the same with or different from those used in the red-, green- and blue-sensitive emulsion layers. A color filter with colored red, green and blue, and colored black having a high density as shown in Fig. 3 can be obtained by exposing the material through the mask filter as shown in Fig. 2, the same as above, then subjecting to color development, desilvering and washing.

In the above (I) or (II), color sensitivity is not limited to combinations of blue sensitivity, green sensitivity, red sensitivity and infrared sensitivity, and may be combined with ultraviolet sensitivity or yellow sensitivity, or a plurality of infrared sensitivities having different sensitive wavelength ranges may be adopted. The order of coating of silver halide emulsion layers having different color sensitivities can be set arbitrarily. Further, in addition to the above layer constitution, an underlayer, an interlayer, a yellow filter layer capable of bleaching, a protective layer or an ultraviolet absorbing layer may be provided, if desired.

Other components of the photosensitive material and processing methods preferably used in the present invention are described below.

Preferred examples of the silver halide to be contained in the emulsion layers of the photosensitive material of the present invention include silver chloride, silver chlorobromide, silver bromide, silver iodobromide and silver chloroiodobromide, and the average iodide content is preferably 3% or less, more preferably 0%.

The silver halide grains in the emulsion may have a regular crystal form such as a cubic, octahedral or tetradecahedral form, an irregular crystal form such as a spherical or plate-like form, a form having crystal defects such as twin crystal planes, or a composite form of these forms.

The silver halide grains may be fine grains having a grain size of about 0.2 µm or less (e.g., a Lippmann emulsion), or a large grain size having a projected area diameter of up to about 10 µm, and the emulsion may be a polydisperse emulsion or a monodisperse emulsion, but a monodisperse emulsion having a grain size of from 0.01 to 1.5 µm and a variation coefficient of 15% or less is preferably used.

The silver halide emulsions for use in the present invention can be prepared using the methods disclosed, for example, in Research Disclosure (RD), Vol. 176, No. 17643 (December, 1978), pages 22 and 23, "I. Emulsion Preparation and Types", RD, No. 18716 (November, 1979), page 648, P. Glafkides, Chimie et Physique Photographique, Paul Montel (1967), G.F. Duffin, Photographic Emulsion Chemistry, Focal Press (1966), and V.L. Zelikman, et al., Making and Coating Photographic Emulsion, Focal Press (1964).

The monodisperse emulsions disclosed in U.S. Patents 3,574,628, 3,655,394 and British Patent 1,413,748 are also preferably used.

Further, tabular grains having an aspect ratio of about 5 or more can be used in the present invention. Tabular grains can be easily prepared according to the methods disclosed, for example, in Gutoff, Photographic Science and Engineering, Vol. 14, pages 248 to 257 (1970), U.S. Patents 4,434,226, 4,414,310, 4,433,048, 4,439,520 and British Patent 2,112,157.

The crystal structure may be homogeneous, or the interior and exterior parts of the grains may comprise different halogen compositions, or the grains may have a layered structure. Silver halides which have different compositions may be joined with an epitaxial junction or may be joined with compounds other than a silver halide, such as silver thiocyanate or lead oxide.

Further, a mixture of grains which have various crystal forms may also be used.

The photosensitive silver halide emulsion is generally chemically sensitized. The photosensitive silver halide emulsion of the present invention can be chemically sensitized with known sensitizing methods used for the emulsions for general type photosensitive materials, for example, a chalcogen sensitizing method such as a sulfur sensitizing method, a selenium sensitizing method and a tellurium sensitizing method, a noble metal sensitizing method using gold, platinum and palladium, and a reduction sensitizing method, alone or in combination (e.g., JP-A-3-110555, Japanese Patent Application No. 4-75798). Sensitization can be carried out in the presence of a nitrogen-containing heterocyclic compound (JP-A-62-253159). Further, the antifogging agents described later can be added after completion of chemical sensitization. Specifically, the methods disclosed in JP-A-5-45833 and JP-A-62-40446 can be used.

Chemical sensitization is carried out preferably at a pH of from 5.3 to 10.5, more preferably from 5.5 to 8.5 and preferably at a pAg of from 6.0 to 10.5, more preferably from 6.8 to 9.0.

The coating amount of the photosensitive silver halide emulsion for use in the present invention is 1 mg/m² to 10 g/m² in terms of silver.

For imparting color sensitivity such as green sensitivity, red sensitivity and infrared sensitivity to the photosensitive silver halide emulsion for use in the present invention, the photosensitive silver halide emulsion is spectrally sensitized with a methine dye or the like. Further, if necessary, a blue-sensitive emulsion may be spectrally sensitized in blue region.

Sensitizing dyes which are used include a cyanine dye, a merocyanine dye, a complex cyanine dye, a complex merocyanine dye, a holopolar cyanine dye, a hemicyanine dye, a styryl dye and a hemioxonol dye.

Examples of the sensitizing dye are disclosed in U.S. Patent 4,617,257, JP-A-59-180550, JP-A-64-13546, JP-A-5-45828, JP-A-5-45834, etc.

These sensitizing dyes may be used alone or in combination and, in particular, the use of two or more sensitizing dyes in combination is often used for the purpose of supersensitization and the adjustment of spectrally sensitized wavelength.

A dye which does not provide a spectral sensitizing action by itself but provides a supersensitization effect or a compound which does not substantially absorb visible light but provides a supersensitization effect may be contained in the emulsion along with a sensitizing dye (e.g., those disclosed in U.S. Patent 3,615,641 and JP-A-63-23145).

The sensitizing dye may be added to the emulsion during chemical ripening or before or after chemical ripening, or before or after the nucleus formation of silver halide grains according to U.S. Patents 4,183,756 and 4,225,666. The sensitizing dye and supersensitizer can be added in the form of a solution of an organic solvent such as methanol, a dispersion such as gelatin or a solution of a surfactant. The addition amount is generally from about 10⁻⁸ to 10⁻² mol per mol of silver halide.

Additives to be used in these processes are disclosed in the above RD, No. 17643, RD, No. 18716 and RD, 307105 and the related locations of the disclosures are summarized in the table below.

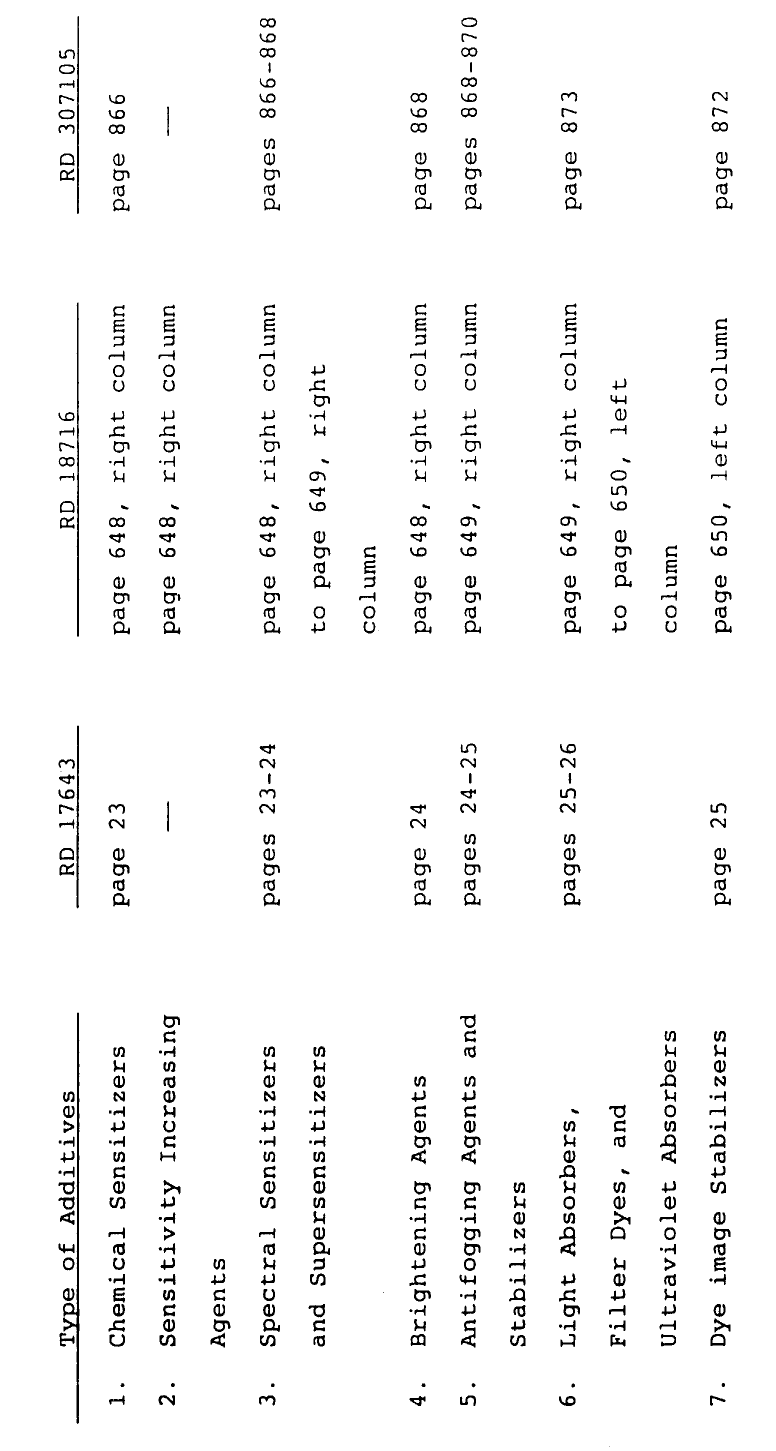

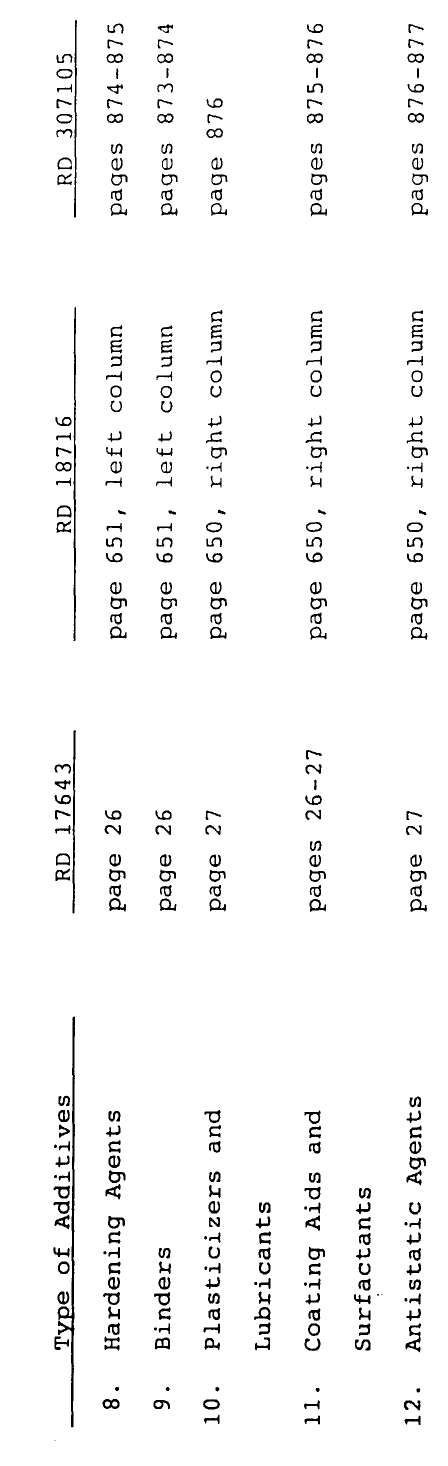

Various kinds of couplers as shown below can be used in the present invention in addition to the above described couplers.

Typical examples of polymerized dye-forming couplers are disclosed in U.S. Patents 3,451,820, 4,080,211, 4,367,282, and British Patent 2,102,173.

Couplers which release photographically useful residual groups upon coupling can also be preferably used in the present invention. Preferred examples of the DIR coupler which releases a development inhibitor include those disclosed in the patents cited in the foregoing RD, No. 17643, Item VII-F, and JP-A-57-151944, JP-A-57-154234, JP-A-60-184248, and U.S. Patent 4,248,962.

The couplers disclosed in British Patents 2,097,140, 2,131,188, JP-A-59-157638, and JP-A-59-170840 are preferred as a coupler which imagewise releases a nucleating agent or a development accelerator at the time of development.

Other couplers which can be used in the photosensitive material of the present invention include the competitive couplers disclosed in U.S. Patent 4,130,427, the multiequivalent couplers disclosed in U.S. Patents 4,283,472, 4,338,393 and 4,310,618, the DIR redox compound releasing couplers disclosed in JP-A-60-185950, and the couplers releasing a dye which restores color after separation disclosed in EP 173,302A.

Couplers for correcting black color are not limited to couplers to be colored yellow, magenta and cyan, for example, couplers to be colored brown, orange, purple, and black can also be used.

As the couplers for use in the present invention, two-equivalent couplers substituted with a releasing group are preferred to four-equivalent couplers which have a hydrogen atom at the active position, since the coating amount of silver can be reduced.

The couplers for use in the present invention can be introduced into the photosensitive material using various known dispersing methods.

Examples of the high boiling point solvent which can be used in oil-in-water dispersion methods are disclosed in U.S. Patent 2,322,027.

The processes and effects of the latex dispersion method, and examples of latexes for impregnation are disclosed in U.S. Patent 4,199,363, West German Patent Application (OLS) Nos. 2,541,274 and 2,541,230.

It is preferred to incorporate the dye image storability improving compounds as disclosed in EP 0,277,589 A2 into the coupler-containing layer in the photosensitive material of the present invention. In particular, the use in combination with a pyrazoloazole based magenta coupler is preferred.

That is, compound (F) which produces a chemically inert and substantially colorless compound by reacting with the aromatic amine based developing agent remaining after color development processing and/or compound (G) which produces a chemically inert and substantially colorless compound by reacting with the oxidant of the aromatic amine based color developing agent remaining after color development processing are preferably used in combination or individually in order to prevent generation of stains during storage after processing which is due to formation of a dye by the reaction of a coupler with a color developing agent or its oxidant remaining in the film, and to prevent other side reactions.

The photosensitive material of the present invention may contain hydroquinone derivatives, aminophenol derivatives, gallic acid derivatives, ascorbic acid derivatives, etc., as a color fog inhibitor.

Further, to prevent the deterioration of cyan dye images due to heat and, in particular, light, it is more effective to incorporate an ultraviolet absorber into a cyan color forming layer and both layers adjacent thereto.

Examples of the ultraviolet absorber include aryl-substituted benzotriazole compounds (e.g., those disclosed in U.S. Patent 3,533,794), 4-thiazolidone compounds (e.g., those disclosed in U.S. Patents 3,314,794 and 3,352,681), benzophenone compounds (e.g., those disclosed in JP-A-46-2784), cinnamate compounds (e.g., those disclosed in U.S. Patents 3,705,805 and 3,707,395), butadiene compounds (e.g., those disclosed in U.S. Patent 4,045,229), and benzoxazole compounds (e.g., those disclosed in U.S. Patents 3,406,070 and 4,271,307). Ultraviolet absorbing couplers (e.g., α-naphthol type cyan dye forming couplers) and ultraviolet absorbing polymers may also be used. These ultraviolet absorbers may be mordanted to a specific layer. Among them, the foregoing aryl-substituted benzotriazole compounds are preferred.

It is also preferred for the photosensitive material of the present invention to contain the antibacterial and antifungal agents as disclosed in JP-A-63-271247 to prevent propagation of various bacteria and mold in a hydrophilic colloid layer which deteriorate an image.

Gelatin is advantageously used as a binder or protective colloid for a silver halide emulsion layer, an interlayer, or a protective layer of the photosensitive material of the present invention. In addition to gelatin, other hydrophilic polymers can be used as well. There can be used as hydrophilic polymers, for example, polyvinyl alcohol, partially acetalated polyvinyl alcohol, polyvinyl butyral, poly-N-vinylpyrrolidone, polyacrylic acid, polyacrylamide, polyvinylimidazole, polyvinylpyrazole, carrageenan, arabic gum, and cellulose derivatives such as hydroxyalkyl cellulose, carboxymethyl cellulose, cellulose sulfate, cellulose acetate hydrogen phthalate and sodium alginate, either as homopolymers or copolymers.

Further, a gelatin-graft polymer comprising gelatin and other polymer can also be used. Gelatin grafted with homopolymers or copolymers of vinyl monomers such as acrylic acid, methacrylic acid, derivatives thereof such as esters and amides, acrylonitrile, and styrene can be used as the gelatin-graft polymer. In particular, graft polymers with polymers compatible with gelatin in some degree (e.g., polymers of acrylic acid, methacrylic acid, acrylamide, methacrylamide, and hydroxyalkylmethacrylate) are preferred. Examples thereof are disclosed in U.S. Patents 2,763,625, 2,831,767, 2,956,884 and JP-A-56-65133.

As the representative synthetic hydrophilic high molecular substance, those disclosed, for example, in West German Patent Application (OLS) No. 2,312,708, U.S. Patents 3,620,751, 3,879,205 and JP-B-43-7561 (the term "JP-B" as used herein refers to an "examined Japanese patent publication") can also be used.

The hydrophilic polymer may be used alone or in combinations of two or more.

Alkali-processed gelatin, acid-processed gelatin and enzyme-processed gelatin, or a mixture thereof can be used. Further, gelatin derivatives obtained by reacting gelatin with various compounds, e.g., acid halide, acid anhydride, isocyanates, bromoacetic acid, alkane sultone acid, vinylsulfonamides, maleinimide compounds, polyalkylene oxides, and epoxy compounds can also be used. Examples of the gelatin derivative are disclosed in U.S. Patents 2,614,928, 3,132,945, 3,186,846, 3,312,553, British Patents 861,414, 1,033,189, 1,005,784, and JP-B-42-26845.

The support for use in the present invention is preferably a light transmitting substrate, but the photosensitive material for a color filter may be formed by coating a silver halide emulsion layer on a support and transferring and closely contacting it on the light transmitting substrate as disclosed in Japanese Patent Application No. 6-1363. In this case, the support is not necessarily light transmitting, for example, a support coated with carbon black may be sufficient.

As examples of the materials constituting light transmitting substrates, those optically isotropic and excellent in heat resistance are preferred, for example, polyethylene terephthalate, polybutylene terephthalate, polyethylene naphthalate, polystyrene, polycarbonate, polyether sulfone, cellulose acetate, polyallylate, soda glass, borosilicate glass, quartz, etc.

The surface of the substrate comprising these materials may be undercoated, if necessary. Further, the surface may be subjected to treatments such as glow discharge, corona discharge, or UV irradiation.

The light transmitting substrate can be used in the form of a plate, a sheet or a film. The thickness of the substrate can be set arbitrarily according to the end use purpose and the material, but is generally from 0.01 to 10 mm. For example, when the substrate is a glass, the thickness is from 0.3 to 3 mm.

The photosensitive material for use in the present invention is color developed according to the general methods as disclosed in the foregoing RD, No. 17643, pages 28 and 29, and RD, No. 18716, page 651, from the left column to the right column, thus a microcolor filter can be obtained. Further, a pre-hardening treatment or a post-hardening treatment may be carried out.

For example, a color development process, a desilvering process, and a washing process are carried out. In the desilvering process, a bleach-fixing process using a bleach-fixing solution can be carried out instead of a bleaching process using a bleaching solution and a fixing process using a fixing solution. A bleaching process, a fixing process and a bleach-fixing process may be combined in an arbitrary order. A stabilizing process may be conducted in place of a washing process, or a stabilizing process may be carried out after a washing process. Further, a monobath process can be carried out in which color development, bleaching and fixing are conducted in a monobath using a combined developing-bleaching-fixing solution. A pre-hardening process, a neutralization process, a stop-fixing process, a post-hardening process, a compensating process, an intensification process, etc., may be carried out in combination with these processes. In these processes, a so-called activator process may be carried out instead of a color development process.

As the exposure method applicable to the present invention, there are a mask exposure system through a mask and a scanning exposure system. As a scanning system, a point scanning system using line (slit) scanning or laser exposure, etc., is applicable.

As a light source, a tungsten lamp, a halogen lamp, a fluorescent lamp (e.g., a triple wavelength fluorescent lamp), a mercury lamp, a laser beam, a light emitting diode, etc., are used. In particular, a halogen lamp, a fluorescent lamp and a laser beam are preferred.

The color filter produced with the silver halide photosensitive material according to the present invention can be coated with a protective coat (an overcoat layer) of a resin having heat resistance, waterproof ability and high electric resistivity as an outermost layer. Examples of such a resin are disclosed in U.S. Patents 4,698,295, 4,668,601, European Patent Applications EP-179636A and EP-556810A, JP-A-3-163416, JP-A-3-188153, JP-A-5-78443, JP-A-1-276101, JP-A-60-216307, and JP-A-63-218771.

Said color filter can be further provided with a transparent electrode (ITO) by evaporation coating, e.g., vacuum evaporation or sputtering.

An orientation coat of a polyimide resin or the like can further be provided thereon.

Moreover, a polarizing plate and a phase difference film may be provided on the side opposite to the emulsion coated side of the light transmitting substrate of the color filter.

A color liquid crystal display (hereinafter abbreviated as LCD) using the color filter obtained from the silver halide photosensitive material according to the present invention will be described below.

In Fig. 5 is shown a schematic cross section of an example of LCD. Color filter 2, of which surface is covered with a protective film (not shown) made of the above-mentioned resin, is formed on glass substrate 1 according to the present invention. Transparent electrode, e.g., an indium-tin oxide (ITO) electrode, is formed on the protective film by means of a vacuum film-forming apparatus. Transparent electrode 3 is usually provided on the entire surface of the color filter in the case of active matrix-driven LCD using a three-terminal switching array like TFT or in the stripe form in the case of simple matrix-driven LCD or active matrix-driven LCD using a two-terminal switching array like MIM. On transparent electrode 3 is provided orientation layer 4 comprising polyimide, etc. for alignment of liquid crystal molecules.

The ITO-glass substrate having color filter 3 is assembled with another glass substrate 7 having formed thereon transparent electrode (e.g., an ITO electrode) 8 and orientation layer 4 in this order via liquid crystal layer 5, spacers (not shown) and sealing material 6. In the case of active matrix-driven LCD using a three-terminal switching array like TFT, transparent electrode 8 is a pixel electrode connected with TFT elements. In the case of simple matrix-driven LCD, such as STN mode LCD, transparent electrode 8 usually has the form of stripes crossing the stripes of transparent electrode 3 on the other side.

Black matrix 9 is usually formed among R, G, and B pixels to improve contrast or color purity. Black matrix 9 can be formed simultaneously with the formation of R, G, and B pixels, or a chromium film or a carbon film may be formed separately. Polarizers 10 and 11 are placed on the back side of glass substrates 1 and 2, respectively. If desired, a phase compensator (not shown) may be provided between each glass substrate and the polarizer.

Because the LCD using a color filter has a low light transmission, back light 12 is usually placed as a light source which matches the color filter in color reproduction.

A plastic film having a gas barrier layer or a hard coating layer may be used in place of the above-described glass substrate as a light-transmitting substrate.

For the details of color LCD and methods for producing color LCD, reference can be made to Matsumoto Shoichi and Tsunoda Nagayoshi, Ekisho No Kiso To Ouyo (Basis and Application of Liquid Crystal), Kogyo Chosakai Publishing Co., Ltd. (1991), Nikkei Microdevice (ed.), Flat Panel Display 1994, Nikkei Business Publications, Inc. (1993), and JP-A-1-114820.

The present invention will now be illustrated in greater detail with reference to the following examples, but it should be understood that the present invention is not construed as being limited thereto. All percents are by weight unless otherwise indicated.

### EXAMPLE 1

A polyethylene terephthalate support having a thickness of 100 µm whose back side had been coated with polyvinyl chloride containing carbon black dispersed therein as a backing layer was undercoated with gelatin, and the first to ninth layers of the constitution shown below were multilayer coated thereon, thus, Color Photosensitive Material 1A (Comparative Material) was prepared. The components and the coating amounts (unit: g/m²) were shown below. The coating amounts of the silver halide and the colloidal silver emulsion are indicated in terms of silver. Silver halide emulsion in each layer is a negative type silver chlorobromide.

| First Layer (Peeling Layer) | |
|---|---|
| Hydroxyethyl Cellulose (HEC-SP500) (manufactured by Daicel Chemical Industries Ltd.) | 0.72 |
| Polyvinylpyrrolidone (K-30) | 0.12 |
| Antistatic Agent (Cpd-1) | 0.60 |

| Second Layer (Gelatin Adjacent Layer) | |
|---|---|
| Gelatin | 0.50 |
| Antistatic Agent (Cpd-1) | 0.30 |

| Third Layer (blue-sensitive layer) | |
|---|---|
| Silver Chlorobromide Spectrally Sensitized with Blue Sensitizing Dye (ExS-4) (Br: 80 mol%, 0.5 µm) | 0.33 |
| Antifogging Agent (Cpd-2) | 0.02 |
| Gelatin | 0.80 |
| Cyan Coupler (ExC-1) | 0.49 |
| Magenta Coupler (ExM-1) | 0.04 |
| Discoloration Inhibitor (Cpd-3) | 0.04 |
| Ultraviolet Absorber (Cpd-6) | 0.04 |
| Ultraviolet Absorber (Cpd-7) | 0.08 |
| High Boiling Point Solvent (Solv-1) | 0.35 |
| High Boiling Point Solvent (Solv-2) | 0.03 |

| Fourth Layer (interlayer) | |
|---|---|
| Gelatin | 1.13 |
| Color Mixing Inhibitor (Cpd-4) | 0.08 |
| High Boiling Point Solvent (Solv-1) | 0.03 |
| High Boiling Point Solvent (Solv-3) | 0.01 |
| Ultraviolet Absorber (Cpd-5) | 0.02 |
| Ultraviolet Absorber (Cpd-6) | 0.01 |
| Ultraviolet Absorber (Cpd-7) | 0.04 |
| Ultraviolet Absorber (Cpd-8) | 0.06 |
| Stain Inhibitor (Cpd-9) | 0.05 |
| Yellow Dye (YF-1) | 0.15 |

| Fifth Layer (green-sensitive layer) | |
|---|---|
| Silver Chlorobromide Spectrally Sensitized with Green Sensitizing Dyes (ExS-2, -3) (Br: 30 mol%, 0.2 µm) | 0.50 |
| Antifogging Agent (Cpd-10) | 0.001 |
| Gelatin | 1.40 |
| Cyan Coupler (Exemplary Coupler C-9) | 0.39 |
| Yellow Coupler (Exemplary Coupler Y-9) | 0.51 |
| High Boiling Point Solvent (Solv-2) | 0.31 |
| High Boiling Point Solvent (Solv-3) | 0.57 |
| High Boiling Point Solvent (Solv-4) | 0.20 |

| Sixth Layer (interlayer) | |
|---|---|
| Gelatin | 1.16 |
| Color Mixing Inhibitor (Cpd-4) | 0.08 |
| High Boiling Point Solvent (Solv-1) | 0.03 |
| High Boiling Point Solvent (Solv-3) | 0.01 |
| Ultraviolet Absorber (Cpd-5) | 0.02 |
| Ultraviolet Absorber (Cpd-6) | 0.01 |
| Ultraviolet Absorber (Cpd-7) | 0.04 |
| Ultraviolet Absorber (Cpd-8) | 0.06 |
| Stain Inhibitor (Cpd-9) | 0.05 |
| Irradiation Preventing Dye (Dye-1) | 0.01 |
| Irradiation Preventing Dye (Dye-2) | 0.02 |

| Seventh Layer (red-sensitive layer) | |
|---|---|
| Silver Chlorobromide Spectrally Sensitized with Red Sensitizing Dye (ExS-1) (Br: 25 mol%, 0.2 µm) | 0.41 |
| Antifogging Agent (Cpd-11) | 0.005 |
| Gelatin | 1.23 |
| Yellow Coupler (ExY-1) | 0.51 |
| Magenta Coupler (ExM-2) | 0.25 |
| High Boiling Point Solvent (Solv-1) | 0.48 |
| High Boiling Point Solvent (Solv-2) | 0.43 |

| Eighth Layer (interlayer) | |
|---|---|
| Gelatin | 0.51 |

| Ninth Layer (protective layer) | |
|---|---|
| Gelatin | 1.43 |
| Colloidal Silver Emulsion (average grain size: 0.02 µm) | 0.20 |
| Polymer (Cpd-12) | 0.28 |
| Surfactant (Cpd-13) | 0.06 |
| Hardening Agent (H-1) | 0.12 |

Cpd-14 was added to each silver halide emulsion layer in an amount of 4 × 10⁻⁶ mol to a blue-sensitive layer, 3 × 10⁻⁵ mol to a green-sensitive layer and 1 × 10⁻⁵ mol to a red-sensitive layer, respectively, per mol of silver halide.

Further, Cpd-15 was added in an amount of 1.2 × 10⁻² mol to a blue-sensitive layer and 1.1 × 10⁻² mol to a green-sensitive layer, respectively, per mol of silver halide.

Moreover, sodium dodecylbenzenesulfonate as an aid for emulsifying and dispersing, ethyl acetate as an auxiliary solvent, Cpd-16 as a coating aid, and further, potassium polystyrenesulfonate as a thickener were added to each layer.

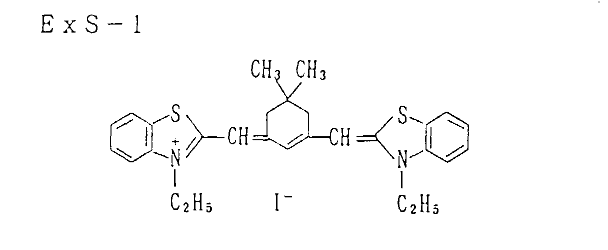

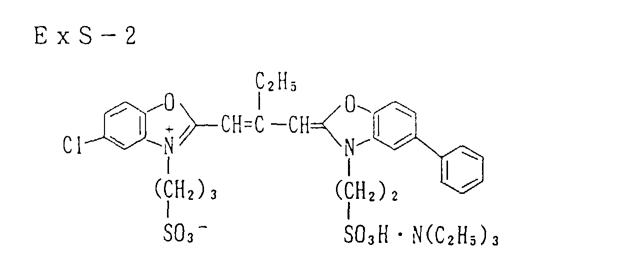

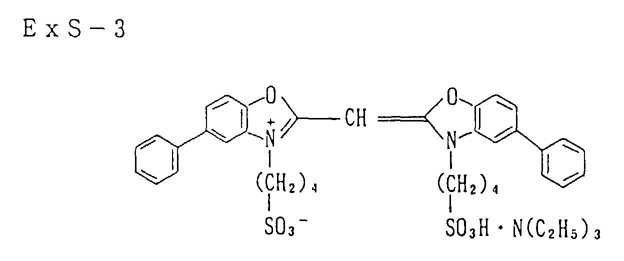

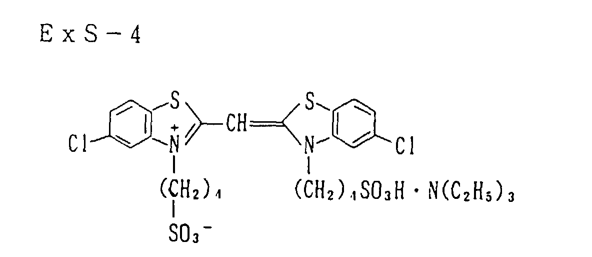

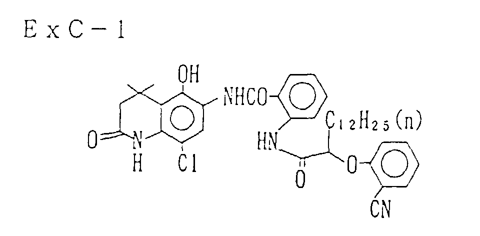

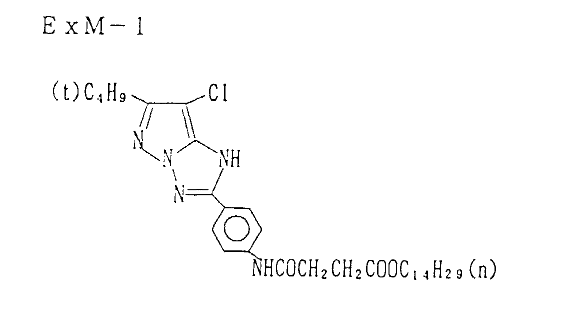

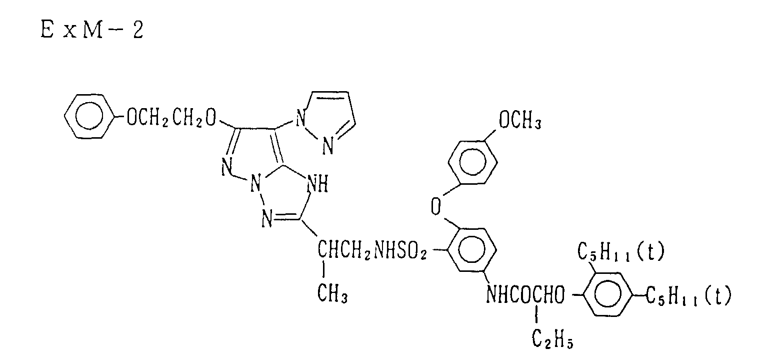

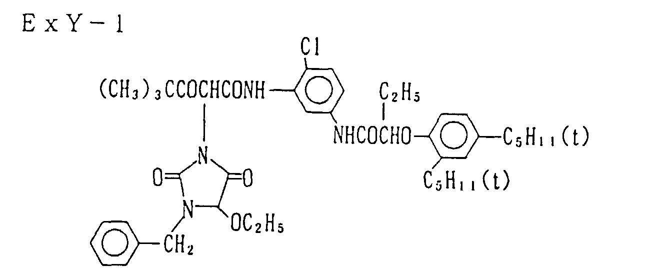

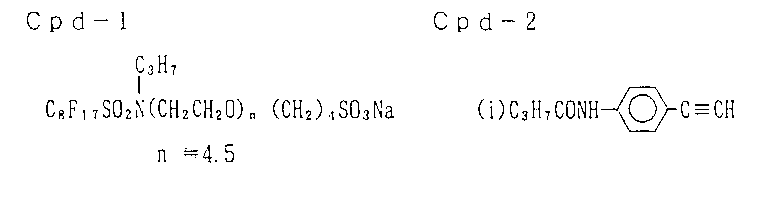

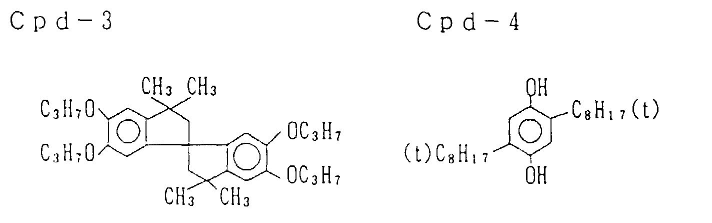

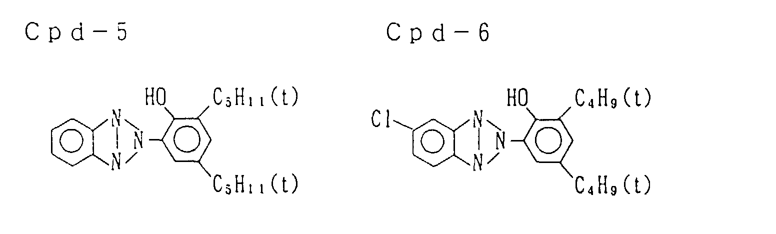

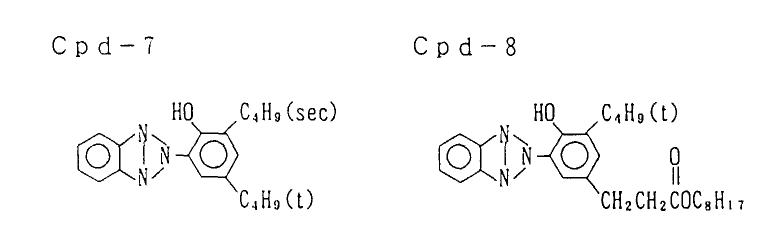

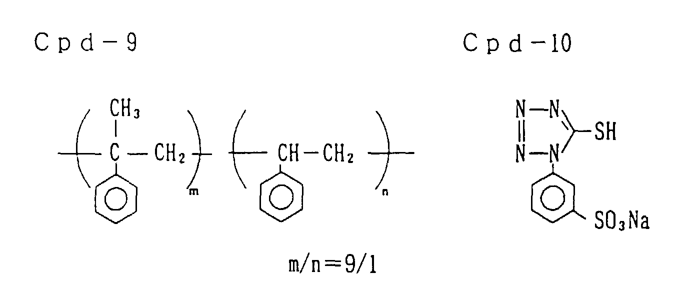

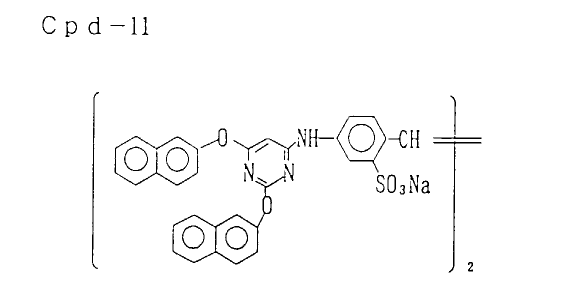

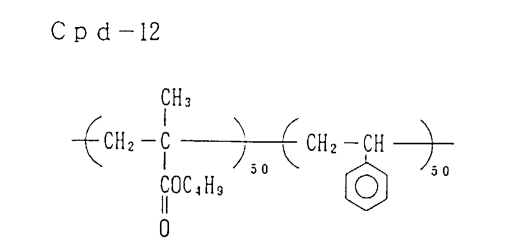

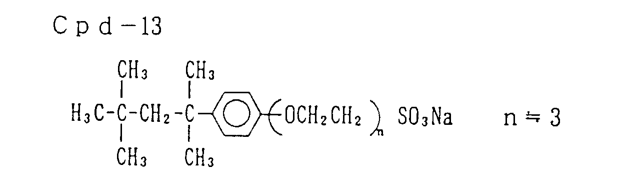

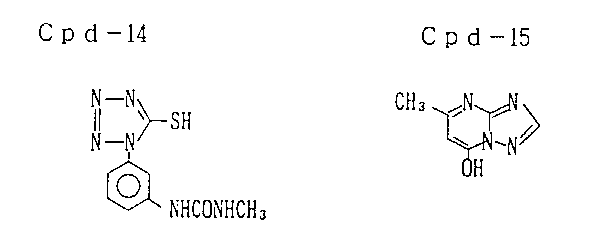

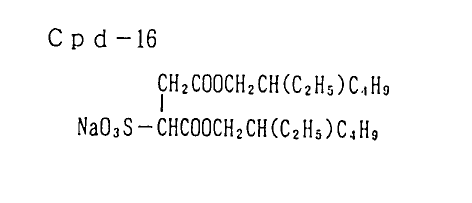

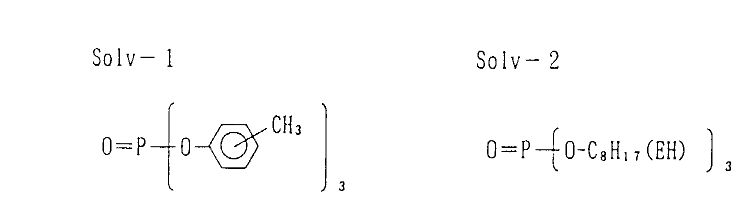

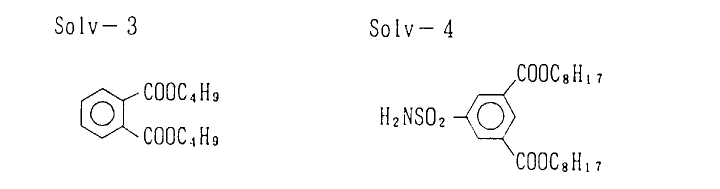

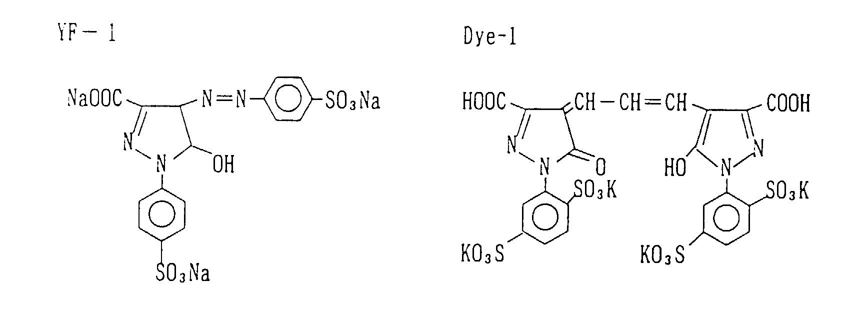

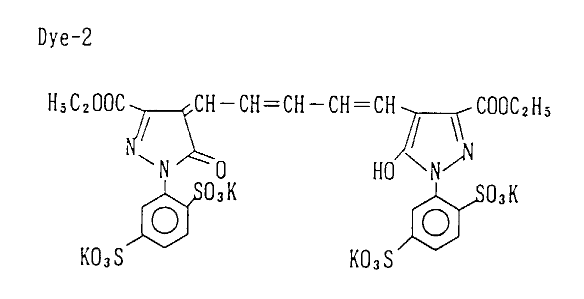

H-1 CH₂=CHSO₂CH₂SO₂CH=CH₂

Comparative Color Photosensitive Material 2A was prepared which had the same constitution as Comparative Color Photosensitive Material 1A except that the components in the fifth layer (green-sensitive layer) were changed, i.e., the cyan coupler was replaced with ExC-1, the yellow coupler was replaced with ExY-1, and the high boiling point solvents were replaced with Solv-1 and Solv-2. The coated amounts of ExC-1, ExY-1, Solv-1, and Solv-2 were 0.25 g/m², 0.65 g/m², 0.48 g/m², and 0.35 g/m², respectively.

Transparent borosilicate glass (20 cm × 30 cm) having a thickness of 1.1 mm was used as a light transmitting substrate. Gelatin and colloidal silica (average particle size: 7 to 9 mµ) were mixed in a weight ratio of 1/3, saponin was added thereto as a surfactant and the solution was coated on the surface of the substrate. The dry thickness of the film was 0.2 µm.

The protective layer of the foregoing color photosensitive material was closely contacted with the coated face of the light transmitting substrate. Subsequently, the temperature of the contact face was set up to become 130°C using a laminator, and the substrate with the photosensitive material was passed at a line speed of 0.45 m/min. After the material was cooled to about room temperature, the support of the photosensitive material was peeled off from the emulsion face. The emulsion face was adhered uniformly on the substrate and white vacancy was not seen.

The thus prepared substrate having the emulsion layer was exposed with a tungsten lamp from the emulsion face side through a mask for the color filter having a mosaic pattern of blue, green and red parts on the transparent background. The exposed substrate was developed according to the following step, and the color filter colored B, G, R and black was prepared by one operation.

| Processing Step | Temperature | Time |
|---|---|---|
| Hardening Process | 38°C | 3 min |
| Washing-1 | 35°C | 1 min |
| Color Development | 38°C | 2 min |
| Bleach-Fixing | 38°C | 2 min |
| Washing-2 | 35°C | 40 sec |
| Washing-3 | 35°C | 40 sec |
| Drying | 60°C | 2 min |

Composition of each processing solution is as follows.

| Hardening Solution | |
|---|---|
| Sodium Sulfate (anhydrous) | 160.0 g |
| Sodium Carbonate (anhydrous) | 4.6 g |
| Glyoxal-Propylene Glycol Addition Product (55%) | 20.0 ml |
| Water to make | 1 liter |
| pH (25°C) | 9.5 |

| Color Developing Solution | |
|---|---|
| D-Sorbitol | 0.15 g |
| Sodium Naphthalenesulfonate-Formalin Condensation Product | 0.15 g |
| Pentasodium Nitrilo-tris(methylenephosphonate) | 1.80 g |
| Diethylenetriaminepentaacetic Acid | 0.50 g |
| 1-Hydroxyethylidene-1,1-diphosphonic Acid | 0.15 g |
| Diethylene Glycol | 12.0 ml |
| Benzyl Alcohol | 13.5 ml |
| Potassium Bromide | 0.70 g |
| Benzotriazole | 0.003 g |
| Sodium Sulfite | 2.40 g |
| Disodium-N,N-bis(sulfonatoethyl)hydroxylamine | 8.0 g |
| Triethanolamine | 6.00 g |
| N-Ethyl-N-(β-methanesulfonamidoethyl)-3-methyl-4-aminoaniline·3/2 Sulfate· Monohydrate | 6.00 g |
| Potassium Carbonate | 30.0 g |
| Water to make | 1 liter |
| pH (25°C) | 10.6 |

| Bleach-Fixing Solution | |
|---|---|
| Ethylenediaminetetraacetic Acid | 5.0 g |
| Ammonium Ethylenediaminetetraacetato Ferrate | 55.0 g |
| Ammonium Thiosulfate (750 g/liter) | 160 ml |
| Ammonium Sulfite | 40.0 g |
| Ammonium Nitrate | 10.0 g |
| Water to make | 1 liter |
| pH (25°C) | 6.0 |

| Washing Water |
|---|
| Deionized Water (electric conductivity: 5 µS or less) |

The absorbance of the green part of the obtained Color Filters 1A and 2A was measured. The yellow component of Color Filter 1A had an absorption peak wavelength at 433 nm and when the absorbance at this wavelength was taken as 1, the absorbance at 500 nm was 0.23, and the cyan component had an absorption peak wavelength at 664 nm and when the absorbance at this wavelength was taken as 1, the absorbance at 570 nm was 0.25, whereas the yellow component of Color Filter 2A had an absorption peak wavelength at 443 nm and when the absorbance at this wavelength was taken as 1, the absorbance at 500 nm was 0.40, and the cyan component had an absorption peak wavelength at 640 nm and when the absorbance at this wavelength was taken as 1, the absorbance at 570 nm was 0.57. From these results, it can be seen that Color Filter 1A comprising the yellow component and cyan component in accordance with the present invention had a preferred spectral transmission characteristic as compared with comparative Color Filter 2A.

However, when the black part of Color Filter 1A was measured, the transmission densities of cyan, magenta and yellow were 2.8, 2.0, 2.3, respectively. The density of cyan was almost sufficient but the magenta and yellow densities were insufficient. To compensate for this insufficiency, Photosensitive Material 1B according to the present invention was prepared by inserting in order the following infrared-sensitive layer and interlayer between the second layer (gelatin adjacent layer) and the third layer (blue-sensitive layer) of Photosensitive Material 1A.

| Infrared-Sensitive Layer | |
|---|---|
| Silver Chlorobromide Spectrally Sensitized with Infrared Sensitizing Dye (ExS-5) (Br: 30 mol%, 0.3 µm) | 0.25 |
| Supersensitizer (Cpd-11) | 0.01 |
| Gelatin | 0.68 |
| Yellow Coupler (ExY-1) | 0.26 |
| Magenta Coupler (ExM-1) | 0.14 |
| High Boiling Point Solvent (Solv-1) | 0.28 |
| High Boiling Point Solvent (Solv-2) | 0.23 |

| Interlayer | |
|---|---|
| Gelatin | 1.16 |
| Color Mixing Inhibitor (Cpd-4) | 0.08 |
| High Boiling Point Solvent (Solv-1) | 0.03 |
| High Boiling Point Solvent (Solv-3) | 0.01 |
| Ultraviolet Absorber (Cpd-5) | 0.02 |
| Ultraviolet Absorber (Cpd-6) | 0.01 |
| Ultraviolet Absorber (Cpd-7) | 0.04 |
| Ultraviolet Absorber (Cpd-8) | 0.06 |
| Stain Inhibitor (Cpd-9) | 0.05 |

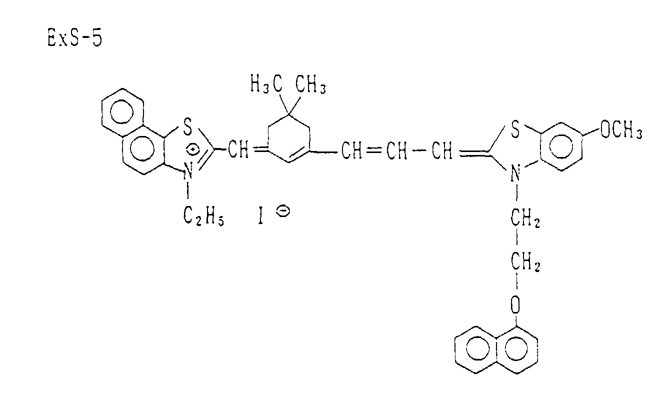

After the emulsion layers of Photosensitive Material 1B were transferred to a glass substrate, the substrate having the emulsion layers was exposed with a tungsten lamp from the emulsion face side through a mask for the color filter having B, G and R in which infrared rays between 700 nm to 850 nm were cut and a transparent background which could transmit infrared rays within the region. The exposed substrate was developed in the same manner as 1A. The transmittance of each of the blue part, green part and red part was almost equal, and the transmission density of cyan, magenta, or yellow in the black part each was between 2.8 and 2.9, and substantial black could be obtained.

### EXAMPLE 2

Comparative color Photosensitive Material 3A having the constitution shown below was prepared using the same support, the same silver halide emulsion, the same coupler, the same additives, as used in Comparative Photosensitive Material 1A.

| First Layer (Peeling Layer) | |
|---|---|
| Hydroxyethyl Cellulose (HEC-SP500, (manufactured by Daicel Chemical Industries Ltd.) | 0.72 |
| Terminal Alkyl Modified Polyvinyl Alcohol (MP-102, saponification degree: 98 mol%, polymerization degree: 300, manufactured by Kuraray Co., Ltd.) | 0.15 |
| Antistatic Agent (Cpd-1) | 0.60 |

| Second Layer (Gelatin Adjacent Layer) | |
|---|---|
| Gelatin | 0.50 |
| Antistatic Agent (Cpd-1) | 0.30 |

| Third Layer (Blue-sensitive Layer) | |
|---|---|
| Silver Chlorobromide Spectrally Sensitized with Blue Sensitizing Dye (ExS-4) (Br: 80 mol%, 0.5 µm) | 0.33 |
| Antifogging Agent (Cpd-2) | 0.02 |
| Gelatin | 0.80 |
| Blue Coupler (ExB-1) | 0.52 |
| Stain Inhibitor (Cpd-17) | 0.01 |
| Ultraviolet Absorber (Cpd-6) | 0.02 |
| Ultraviolet Absorber (Cpd-7) | 0.04 |
| High Boiling Point Solvent (Solv-1) | 0.30 |

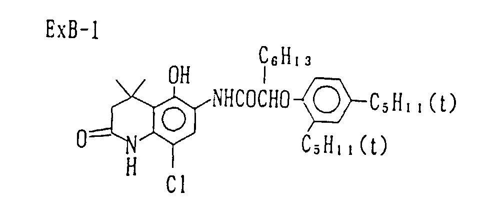

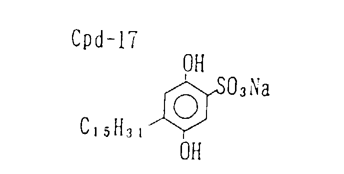

| Fourth Layer (First green-sensitive Layer) | |
|---|---|
| Silver Chlorobromide Spectrally Sensitized with Green Sensitizing Dyes (ExS-2, -3) (Br: 30 mol%, 0.2 µm) | 0.30 |
| Antifogging Agent (Cpd-10) | 0.001 |
| Gelatin | 0.70 |
| Cyan Coupler (Exemplary Coupler C-2) | 0.39 |
| Stain Inhibitor (Cpd-17) | 0.01 |
| Ultraviolet Absorber (Cpd-6) | 0.03 |
| Ultraviolet Absorber (Cpd-7) | 0.06 |
| High Boiling Point Solvent (Solv-3) | 0.57 |
| High Boiling Point Solvent (Solv-4) | 0.20 |
| Yellow Dye (YF-1) | 0.15 |

| Fifth Layer (Second green-sensitive Layer) | |
|---|---|
| Silver Chlorobromide Spectrally Sensitized with Green Sensitizing Dyes (ExS-2, -3) (Br: 30 mol%, 0.2 µm) | 0.30 |
| Antifogging Agent (Cpd-10) | 0.001 |
| Gelatin | 0.70 |
| Yellow Coupler (Exemplary Coupler Y-4) | 0.51 |
| Stain Inhibitor (Cpd-17) | 0.01 |
| High Boiling Point Solvent (Solv-2) | 0.31 |

| Sixth Layer (First red-sensitive Layer) | |
|---|---|
| Silver Chlorobromide Spectrally Sensitized with Red Sensitizing Dye (ExS-1) (Br: 25 mol%, 0.2 µm) | 0.25 |
| Antifogging Agent (Cpd-11) | 0.003 |
| Gelatin | 0.65 |
| Yellow Coupler (ExY-1) | 0.51 |
| Stain Inhibitor (Cpd-17) | 0.13 |
| High Boiling Point Solvent (Solv-2) | 0.30 |
| Irradiation Preventing Dye (Dye-1) | 0.01 |
| Irradiation Preventing Dye (Dye-2) | 0.02 |

| Seventh Layer (Second red-sensitive Layer) | |
|---|---|
| Silver Chlorobromide Spectrally Sensitized with Red Sensitizing Dye (ExS-1) (Br: 25 mol%, 0.2 µm) | 0.25 |
| Antifogging Agent (Cpd-11) | 0.003 |
| Gelatin | 0.60 |
| Magenta Coupler (ExM-2) | 0.25 |
| Stain Inhibitor (Cpd-17) | 0.10 |
| High Boiling Point Solvent (Solv-1) | 0.50 |
| High Boiling Point Solvent (Solv-2) | 0.20 |

| Eighth Layer (Interlayer) | |
|---|---|
| Gelatin | 0.51 |

| Ninth Layer (Protective Layer) | |
|---|---|
| Gelatin | 1.43 |
| Colloidal Silver Emulsion | 0.20 |
| (average grain size: 0.02 µm) | |
| Polymer (Cpd-12) | 0.28 |
| Surfactant (Cpd-13) | 0.06 |
| Hardening Agent (H-1) | 0.10 |

Photosensitive Material 3B according to the present invention was prepared by inserting an infrared-sensitive layer and an interlayer each having the same composition as in Example 1 in this order between the second layer (gelatin adjacent layer) and the third layer (blue-sensitive layer).

Photosensitive Materials 3A and 3B were processed in the same manner as in Example 1. Any of the blue part, green part and red part showed preferred transmittance and color reproduction, the density of magenta or yellow in the black part of Photosensitive Material 3A was insufficient, but Photosensitive Material 3B provided substantial black having a transmission density of about 2.8 in terms of each of cyan, magenta and yellow.

The color filter which has a green part comprising a yellow component and a cyan component having light absorbing characteristics of the present invention is excellent in reproducibility and spectral transmission characteristic of a green color. Further, by using the photosensitive material having the fourth photosensitive layer, a black color correcting layer, a color filter with red, green and blue parts being excellent spectral transmission characteristics and black part (black stripe) having a spectral absorbing characteristic of high density can be obtained.

## Claims

1. A silver halide photosensitive material for a color filter which comprises
- three silver halide emulsion layers having different color sensitivities on a support containing couplers in combination such that the silver halide emulsion layers form blue, green, and red colors, respectively, by a coupling reaction with the oxidation product of a developing agent, wherein the green-coloring silver halide emulsion layer contains a yellow coupler and a cyan coupler, and the yellow component in colored green has an absorption peak wavelength between 400 nm and 450 nm and when the absorbance at the peak wavelength is taken as 1, the absorbance at 500 nm is 0.35 or less, and the cyan component in colored green has an absorption peak wavelength between 630 nm and 700 nm and when the absorbance at the peak wavelength is taken as 1, the absorbance at 570 nm is 0.35 or less; and
- at least one silver halide emulsion layer having a color sensitivity different from those of said three silver halide emulsion layers on the support, wherein said at least one silver halide emulsion layer is a layer containing a coupler for color correction so as to become substantially black with a transmission density of 2.5 or more when all the couplers on the support are reacted.

2. A silver halide photosensitive material for a color filter which comprises
- three silver halide emulsion layers having different color sensitivities on a support containing couplers in combination such that the silver halide emulsion layers form blue, green, and red colors, respectively, by a coupling reaction with the oxidation product of a developing agent, wherein at least a green-coloring silver halide emulsion layer of the silver halide emulsion layers comprises two unit layers in which one unit layer contains a yellow coupler and the other unit layer contains a cyan coupler, the yellow component in colored green has an absorption peak wavelength between 400 nm and 450 nm and when the absorbance at the peak wavelength is taken as 1, the absorbance at 500 nm is 0.35 or less, and the cyan component in colored green has an absorption peak wavelength between 630 nm and 700 nm and when the absorbance as the peak wavelength is taken as 1, the absorbance at 570 nm is 0.35 or less; and
- at least one silver halide emulsion layer having a color sensitivity different from those of said three silver halide emulsion layers on the support, wherein said at least one silver halide emulsion layer is a layer containing a coupler for color correction so as to become substantially black with a transmission density of 2.5 or more when all the couplers on the support are reacted.

## Patentansprüche

1. Lichtempfindliches Silberhalogenidmaterial für einen Farbfilter, umfassend
- drei Silberhalogenidemulsionsschichten mit verschiedenen Farbempfindlichkeiten auf einem Träger, die Kuppler in einer solchen Kombination enthalten, daß die Silberhalogenidemulsionsschichten blaue, grüne und bzw. rote Farbe durch eine Kupplungsreaktion mit dem Oxidationsprodukt eines Entwicklungsmittels bilden, worin die sich grün färbende Silberhalogenidemulsionsschicht einen Gelbkuppler und einen Cyankuppler enthält, und die gelbe Komponente eine Wellenlänge für den Absorptionspeak bei Grünfärbung zwischen 400 nm und 450 nm aufweist, und wenn die Absorption bei der Wellenlänge des Peaks als 1 gesetzt wird, die Absorption bei 500 nm 0,35 oder weniger ist, und die Cyankomponente eine Wellenlänge für den Absorptionspeak bei Grünfärbung zwischen 630 nm und 700 nm aufweist, und wenn die Absorption bei der Wellenlänge des Peaks als 1 gesetzt wird, die Absorption bei 570 nm 0,35 oder weniger ist; und
- mindestens eine Silberhalogenidemulsionsschicht mit einer Farbempfindlichkeit, die verschieden ist von den Farbempfindlichkeiten der genannten drei Silberhalogenidemulsionsschichten auf dem Träger, wobei diese mindestens eine Silberhalogenidemulsionsschicht eine Schicht ist, die einen Kuppler für eine Farbkorrektur enthält, damit das Material im wesentlichen schwarz wird mit einer Transmissionsdichte von 2,5 oder mehr, wenn alle Kuppler auf dem Träger umgesetzt sind.

2. Lichtempfindliches Silberhalogenidmaterial für einen Farbfilter, umfassend
- drei Silberhalogenidemulsionsschichten mit verschiedenen Farbempfindlichkeiten auf einem Träger, die Kuppler in einer solchen Kombination enthalten, daß die Silberhalogenidemulsionsschichten blaue, grüne und bzw. rote Farbe durch eine Kupplungsreaktion mit dem Oxidationsprodukt eines Entwicklungsmittels bilden, worin zumindest eine sich grün färbende Silberhalogenidemulsionsschicht von den Silberhalogenidemulsionsschichten zwei Schichteinheiten umfaßt, wobei eine Schichteinheit einen Gelbkuppler und die andere Schichteinheit einen Cyankuppler enthält, und die gelbe Komponente eine Wellenlänge für den Absorptionspeak bei Grünfärbung zwischen 400 nm und 450 nm aufweist, und wenn die Absorption bei der Wellenlänge des Peaks als 1 gesetzt wird, die Absorption bei 500 nm 0,35 oder weniger ist, und die Cyankomponente eine Wellenlänge für den Absorptionspeak bei Grünfärbung zwischen 630 nm und 700 nm aufweist, und wenn die Absorption bei der Wellenlänge des Peaks als 1 gesetzt wird, die Absorption bei 570 nm 0,35 oder weniger ist; und
- mindestens eine eine Silberhalogenidemulsionsschicht mit einer Farbempfindlichkeit, die verschieden ist von den Farbempfindlichkeiten der genannten drei Silberhalogenidemulsionsschichten auf dem Träger, wobei diese mindestens eine Silberhalogenidemulsionsschicht eine Schicht ist, die einen Kuppler für eine Farbkorrektur enthält, damit das Material im wesentlichen schwarz wird mit einer Transmissionsdichte von 2,5 oder mehr, wenn alle Kuppler auf dem Träger umgesetzt sind.

## Revendications

1. Matériau photosensible à l'halogénure d'argent pour un filtre coloré qui comprend
- trois couches d'émulsions à l'halogénure d'argent présentant différentes sensibilités à la couleur sur un support contenant des agents de couplage dans une combinaison telle que les couches d'émulsions à l'halogénure d'argent forment respectivement les couleurs bleue, verte et rouge, par une réaction de couplage avec le produit d'oxydation d'un révélateur, dans lequel la couche d'émulsion à l'halogénure d'argent colorant en vert contient un agent de couplage du jaune et un agent de couplage du cyan, et le constituant jaune dans le vert coloré présente une longueur d'ondes du pic d'absorption comprise entre 400 nm et 450 nm et l'absorbance à 500 nm est de 0,35 ou inférieure lorsque l'absorbance à la longueur d'ondes du pic est fixée à 1, et le constituant cyan dans le vert coloré présente une longueur d'ondes du pic d'absorption comprise entre 630 nm et 700 nm et l'absorbance à 570 nm est de 0,35 ou inférieure lorsque l'absorbance à la longueur d'ondes du pic est fixée à 1; et
- au moins une couche d'émulsion à l'halogénure d'argent présentant une sensibilité à la couleur différente de celle desdites trois couches d'émulsions à l'halogénure d'argent sur le support, dans lequel ladite au moins une couche d'émulsion à l'halogénure d'argent est une couche contenant un agent de couplage pour une correction de couleur afin de devenir pratiquement noire avec une densité de transmission de 2,5 ou supérieure lorsque tous les agents de couplage sur le support ont réagi.

2. Matériau photosensible à l'halogénure d'argent pour un filtre coloré qui comprend
- trois couches d'émulsions à l'halogénure d'argent présentant différentes sensibilités à la couleur sur un support contenant des agents de couplage dans une combinaison telle que les couches d'émulsions à l'halogénure d'argent forment respectivement les couleurs bleue, verte et rouge, par une réaction de couplage avec le produit d'oxydation d'un révélateur, dans lequel au moins une couche d'émulsion à l'halogénure d'argent colorant en vert des couches d'émulsions à l'halogénure d'argent comprend deux couches unitaires, dans lequel une couche unitaire comprend un agent de couplage du jaune et l'autre couche unitaire contient un agent de couplage du cyan, le constituant jaune dans le vert coloré présente une longueur d'ondes de pic d'absorption comprise entre 400 nm et 450 nm et l'absorbance à 500 nm est de 0,35 ou inférieure lorsque l'absorbance à la longueur d'ondes du pic est fixée à 1, et le constituant cyan dans le vert coloré présente une longueur d'ondes du pic d'absorption comprise entre 630 nm et 700 nm et l'absorbance à 570 nm est de 0,35 ou inférieure lorsque l'absorbance à la longueur d'ondes du pic est fixée à 1; et
- au moins une couche d'émulsion à l'halogénure d'argent présentant une sensibilité à la couleur différente de celle desdites trois couches d'émulsions à l'halogénure d'argent sur le support, dans lequel ladite au moins une couche d'émulsion à l'halogénure d'argent est une couche contenant un agent de couplage pour une correction de couleur afin de devenir pratiquement noire avec une densité de transmission de 2,5 ou supérieure lorsque tous les agents de couplage sur le support ont réagi.
